# EUROPEAN PATENT APPLICATION

(11) **EP 4 286 697 A1**
(43) Date of publication of application: **06.12.2023**
(21) Application number: 22176662.9
(22) Date of filing: 01.06.2022
(51) Int. Cl.: F16B 21/07, F16L 37/52, H01R 13/24, H01R 13/631

(54) **SYSTEM COUPLING DEVICE AND ARRANGEMENT, ASSEMBLY, AIRCRAFT OR SPACECRAFT, AS WELL AS METHOD OF COUPLING TWO SYSTEM PORTIONS OF AT LEAST ONE SYSTEM**

(71) Applicant: Airbus Operations GmbH, 21129 Hamburg (DE)
(72) Inventor: Benthien, Hermann, 21129 Hamburg (DE); Hegenbart, Matthias, 21129 Hamburg (DE)

(57) **Abstract**

The invention relates to a system coupling device (1, 2), comprising a body (5, 7) which has a curved surface portion (11, 13) and carries at least one first system connector component (17a-17c, 19a-19c). The first system connector component (17a-17c, 19a-19c) is configured to be capable of interacting with an associated second system connector component (19a-19c, 17a-17c) in order to connect two system portions of at least one system (Sy1, Sy2, Sy3). The curved surface portion (11, 13) is configured as a bearing surface of a condyloid joint and is arranged in such a manner as to face a forward half-space (FH1, FH2) during system coupling using the device (1, 2). Further, the invention relates to a system coupling arrangement (3), to an assembly (61, 63, 67, 71-75, 79-83, 85, 86, 97, 99) configured for being installed in or forming part of an aircraft or spacecraft, and to an aircraft or spacecraft (101). Moreover, a method of coupling two system portions of at least one system is proposed.

## Description

### FIELD OF THE INVENTION

The invention relates to a system coupling device and to an assembly comprising such a system coupling device. Furthermore, the invention relates to a system coupling arrangement and to an aircraft or spacecraft comprising such a system coupling arrangement or such an assembly. Still further, the invention relates to a method of coupling two system portions of at least one system.

### TECHNICAL BACKGROUND

Although the invention may be useful in connection with various kinds of systems such as cables, lines, tubes or similiar that require coupling at interfaces, the invention and the underlying problem will be explained in the following in exemplary manner with reference to the production of an aircraft or spacecraft, more specifically an aeroplane, but without limiting the invention to that effect.

Commercial aircraft such as passenger aeroplanes usually include, in addition to the airframe structure, various devices, monuments and assemblies in order to fulfill various functions within the completed aircraft. For example, an aeroplane may comprise lavatory monuments, storage monuments, assemblies that are related to the interior trim, lighting, ventilation, information and/or entertainment, etc.. These monuments, devices and assemblies must be installed within the airframe, e.g. so as to form a completely equipped passenger cabin, and connections of sections of various systems, such as electrical lines, data lines, ventilation tubes, water conduits, pneumatic lines or hydraulic lines, for instance, must be coupled at various locations when installing these monuments, devices and/or assemblies.

Conventionally, nowadays, such coupling is accomplished by hand. In particular, in a conventional manner, for example a lavatory monument may be positioned in a target position, with connections located at a backside thereof which is oriented toward the peripheral fuselage structure. The location where the coupling is to be established is hence often difficult to access. Therefore, manual coupling of the systems in question is often performed via appropriate, dedicated access holes. The corresponding installation process is complex, laborious, time-consuming and thus costly.

Further, generally, multiple lockable couplings have already been proposed. Some conventional multi-couplings use guidance means such as centering pins. However, conventional centering systems are often prone to jamming if positions and/or orientations of the parts of the coupling to be joined are subject to tolerances or imprecisions. Such conventional multi-couplings may be subject to considerable quality and accuracy requirements to avoid jamming and high installation load.

Conventional multi-couplings usually have to be aligned such that the installation direction is precisely in line with the orientation of individual connectors, and it may even be necessary to provide an individual centering mechanism for each coupled element. Also, in case the positions or orientations of the parts to be coupled do not precisely match, high installation load may act on the individual connectors, which may lead to damage or destruction of the latter.

It would be desirable to be able to establish the coupling of systems, in particular at locations which are comparatively difficult to access, in a simpler manner and more rapidly, to reduce the need for access to and visibility of the coupling location, and to reduce the need for manual intervention by the worker, but without impairing the reliability and durability of the coupling.

US 11 137 004 B2 describes self-centering coupling between modules such as drones, wherein a coupling member comprises a coupling portion that substantially corresponds in its outer contour to a spherical segment of a sphere.

### SUMMARY OF THE INVENTION

In view of this background, the problem to be solved by the present invention is to provide an improved system coupling device which makes it possible to overcome at least some of the above-mentioned difficulties, and in particular enables reliable coupling of a system or systems in a simple, rapid and cost-effective manner. Further, a system coupling arrangement, an assembly, an aircraft or spacecraft and a method of coupling two system portions of at least one system improved in this manner are to be proposed.

According to the invention, this problem can be solved by a system coupling device having the features of claim 1 and/or by a system coupling arrangement having the features of claim 11 and/or by an assembly having the features of claim 13 and/or by an aircraft or spacecraft having the features of claim 14 and/or by a method having the features of claim 15.

There is accordingly provided a system coupling device comprising a body which has a curved surface portion and carries at least one first system connector component. The first system connector component is configured to be capable of interacting with an associated second system connector component in order to connect two system portions of at least one system. The curved surface portion is configured as a bearing surface of a condyloid joint and is arranged in such a manner as to face a forward half-space during system coupling using the device.

Furthermore, there is proposed a system coupling arrangement which comprises a first system coupling device and a second system coupling device. Each of the first and second system coupling devices comprises a body having a curved surface portion, and each of the bodies carries at least one system connector component. The system connector components are configured to interact with each other so as to connect two system portions of at least one system in a configuration in which the curved surface portions are fittingly arranged relative to each other. The curved surface portions are configured to be capable of interacting with each other in the manner of bearing surfaces of a condyloid joint before the two system portions are connected by the interacting system connector components. Furthermore, the curved surface portion of each body is arranged in such a manner as to face a forward half-space relative to the body during joining the devices in order to form the system coupling arrangement.

The invention furthermore provides an assembly configured for being installed in or forming part of an aircraft or spacecraft, in particular an aeroplane, comprising a system coupling device as proposed by the invention.

Moreover, the invention provides an aircraft or spacecraft, in particular aeroplane, comprising a system coupling arrangement and/or an assembly as proposed by the invention.

Still further, a method of coupling two system portions of at least one system is proposed. The method comprises:
- providing a first assembly which comprises a first system coupling device arranged on a first side of the first assembly, and
- providing a second assembly which comprises a second system coupling device arranged on a second side of the second assembly,
wherein each of the first and second system coupling devices comprises a body having a curved surface portion, each of the bodies carrying at least one system connector component;
- arranging the first assembly and the second assembly relative to each other with a distance therebetween, the first and second sides oriented towards each other and the curved surface portion of each body facing a forward half-space relative to the body;
- moving one or both of the first and second assemblies so as to bring the curved surface portions into at least partial contact with each other, and further moving one or both of the first and second assemblies so that one or both of the curved surface portions adjusts or adjust in position and/or orientation in such a way that the curved surface portions assume a configuration of interacting bearing surfaces of a condyloid joint and become fittingly arranged relative to each other, wherein in a fitting arrangement of the curved surface portions the connection of the two system portions is established via the system connector components.

An idea underlying the present invention is to enable reliable and easy coupling of portions of systems at an interface which is positioned in a location that is difficult to access and to observe. Such an interface which might be located, for example, at the rear of a monument to be installed in an aircraft.

Based on the shape of bearing surfaces of a condyloid joint, and thus for instance on the basis of the functional principle of condyloid joints found in e.g. the human body, such as the radiocarpal joint, the present invention enables a "blind" coupling of systems in such locations without impairing the reliability of the system joint at the interface and/or damaging the parts used to implement the system coupling.

More specifically, forces arising when associated system coupling devices as proposed by the invention meet, in order to form the system coupling arrangement, are distributed over a relatively large surface area, which is provided by the curved surface portions facing the forward half-space.

At the same time, positional and orientational imprecisions, i.e. translational and rotational tolerances, which may for instance arise when positioning or shifting the monument inside the fuselage during installation, can be compensated, and for this purpose, the contacting curved surfaces can adjust in position and/or orientation similar to the movement in a condyloid joint in human anatomy. In this manner, the associated first and second system connector components can be aligned for establishing the system connection. The condyloid-type shape also contributes to maintaining the connector components in the correct position once it has been reached.

The invention thus for example enables blind installation of an assembly, module or device which is moved into its final installation position with limited or no view of the system coupling. Particularly, the invention makes it possible to establish a correct system connection even in case of some imprecision in position and orientation of the assembly, module or device to be installed. Damage to the system coupling devices or destruction thereof due to positional or orientational inaccuracies is prevented by the invention. The installation load can be reduced by the invention in terms of time and cost.

Advantageously, the invention enables such quick and reliable coupling in blind situations without the need for a complex and expensive arrangement of sensor devices.

In particular, the invention can be useful for a great variety of situations and applications in which systems should be coupled at an interface.

Advantageous improvements and developments of the invention are contained in the dependent claims as well as in the description referring to the drawings.

In a development, the first system connector component is arranged in the region of the curved surface portion, and preferably is peripherally surrounded at least in part, or along an entire periphery of the connector component, by the curved surface portion. In this manner, the system connector component can easily self-align. Also, the system connector component is well protected during the system coupling process.

In a development, the first system connector component is configured to protrude at least partially from the curved surface portion at least in a protruding state of the first system connector component. Preferably, in this development, the associated second system connector component may be formed with a recess and/or may be configured to form such a recess in an inwardly-moved state of the second system connector component.

In another development, the first system connector component is formed with a recess extending into the body and/or is configured to form such a recess in an inwardly-moved state of the first system connector component. Preferably, in this development, the associated second system connector component is configured to form a protrusion at least in a protruding state of the second system connector component.

In this manner, the system connection by the first and second system connector components can be easily and reliably established once the curved surface portions correctly align.

In a preferred development, the body carries two or more first system connector components. Each of the first system connector components preferably is associated with one of two or more second system connector components of a further, second system coupling device. In this manner, a plurality of systems can be coupled in one step in a reliable and simple manner, even in the case of "blind" installation.

In a development, the first system connector components include at least two system connector components of the same type and/or at least two system connector components of different type. In analogous manner, the second system connector components may include at least two system connector components of the same type and/or at least two system connector components of different type. In this manner, a plurality of systems of the same or different type can be coupled.

In particular, the curved surface portion may be formed as a portion of an ovoid or an ellipsoid, preferably of a triaxial ellipsoid. Further, in particular, the curved surface portion may be configured such that the two largest semi-axes of the ellipsoid are oriented transverse, preferably substantially perpendicular, to a direction along which the first and second system connector components can be operatively connected by moving the first and second system connector components towards each other. This may be helpful to accommodate a plurality of system connector components, e.g. in a row or in the manner of an elongate arrangement, and may furthermore advantageously contribute to the self-aligning effect.

Further, the body may in particular be convex or concave in the region of the curved surface portion. Preferably, in the system coupling arrangement, one of bodies of the first and second system coupling devices is convex, and the other one of the bodies is concave, in the region of the respective curved surface portion.

In particular, the system coupling device is adapted to automatically lock with an associated system coupling device provided with the second system connector components. In the system coupling arrangement, the first and second system coupling devices preferably are configured to automatically lock to each other.

In a development, the system coupling device further comprises a bistable mechanism configured to assume an open configuration and a closed configuration, wherein the bistable mechanism comprises a base section and side sections, wherein the body is supported on the base section and arranged between at least two of the side sections. In this manner, automated orientation and alignment by virtue of the condyloid-type principle can advantageously be combined with an automated locking in the correct position, in which the system portions are connected using the system connector components.

Preferably, the bistable mechanism can be brought from the open into the closed configuration by applying pressure onto the curved surface portion of the body.

In a further development, some or all of the side sections may each be provided with a retaining portion, e.g. a protrusion or an edge, extending towards a space between the side sections on opposite sides of the body, wherein the retaining portions are in particular configured to engage the body of the further, second system coupling device in a state in which the curved surface portions are fittingly arranged relative to each other.

In a preferred development, the body is elastically supported on the base section. In particular, the body may be connected to the base section by at least one resilient member, in particular at least one spring. In this manner, the body is provided with a capability of elastic movement relative to the base, which facilitates the adjustment of the curved surface portion of the body and the tolerance compensation achieved thereby. The resilient member(s) may, in particular, enable translational and rotational elastic movement of the body.

Moreover, in a further preferred improvement, the first system connector component is elastically connected to the body or comprises at least one system connector component part elastically connected to the body. For example, if the first system connector component or a system connector component part thereof protrudes from the curved surface portion, the elastic connection to the body contributes to easily and reliably establishing the connection of the two system portions once the curved surface portions have reached a fitting relative configuration, and may help to avoid excessive mechanical loads and damage.

In particular, the system may be an electrical line or a data line or a pneumatic line or a hydraulic line or a water conduit. A plurality of systems to be coupled may comprise one or more electrical line(s) and/or one or more data line(s) and/or one or more pneumatic line(s) and/or one or more hydraulic line(s) and/or one or more water conduit(s). In this manner, the invention may be useful in a great variety of applications, e.g. in connection with various modules, monuments, devices or assemblies in an aircraft or spacecraft, or alternatively in many other fields of technology.

In still further developments, the assembly proposed by the invention may be configured to be installed in or form part of a fuselage of an aircraft or spacecraft, in particular of an aeroplane.

In a development of the assembly proposed by the invention, the assembly may be configured to be installed in an aircraft passenger cabin and/or may form part of an aircraft passenger cabin.

In particular, the assembly may be formed as a lavatory module or a storage module or a galley module. In another development, the assembly may be formed as a seat module assembly.

Further, in particular, the assembly may be formed as one of a ceiling assembly, a lateral ceiling assembly, an overhead storage compartment assembly, a light cover assembly, a sidewall assembly, a power supply assembly.

In still further developments, the assembly may be formed as a crown module adapted to be installed in upper region of a fuselage of an aircraft or spacecraft, in particular of an aeroplane. The assembly may be formed as a submodule of such a crown module. For example, the assembly may be formed as an upper submodule assembly or a crown triangle assembly of a crown module.

In this manner, the invention considerably facilitates the installation of various assemblies, modules, monuments or devices, in particular in aircraft or spacecraft production, and further in particular in many applications where installation can be facilitated if system coupling can be performed in a "blind" manner.

The improvements, enhancements and developments of the present invention may be arbitrarily combined with each other whenever this makes sense. Moreover, other possible enhancements, implementations and developments of the present invention comprise combinations of features of the invention which have been described above or will be described in the following in relation to the detailed description of embodiments, even where such a combination has not been expressly mentioned.

In particular, the developments and improvements described above with reference to the system coupling device may be applied in analogous manner to the arrangement, assembly, aircraft or spacecraft and method proposed herein.

### BRIEF DESCRIPTION OF THE DRAWINGS

The invention will be explained in the following with reference to the schematic figures of the drawings which illustrate embodiments of the invention. Herein:
- Fig. 1A: a system coupling device of a system coupling arrangement according to an embodiment of the invention, in a side view;
- Fig. 1B: the system coupling device of Fig. 1A in a plan view seen in direction A;
- Fig. 1C: the system coupling arrangement according to the embodiment in a sectional view B - B, with systems not yet fully coupled;
- Fig. 2A-2C: the system coupling devices and arrangement of the embodiment in views corresponding to those of Fig. 1A-1C, with the systems fully coupled;
- Fig. 3A-3C: three sectional views of system coupling devices illustrating three steps of coupling the system coupling devices in order to form the system coupling arrangement of the embodiment;
- Fig. 4: an exemplary aircraft in which the system coupling devices and arrangement according to the embodiment may be used;
- Fig. 5: a cross-sectional view of some parts of an exemplary aircraft fuselage, showing the upper half thereof, illustrating how and where the system coupling devices and arrangement according to the embodiment may be used, in line with various further embodiments of the invention;
- Fig. 6: an exemplary crown module in cross-sectional view, illustrating how and where the system coupling devices and arrangement according to the embodiment may be used, in line with various further embodiments of the invention;
- Fig. 7: a schematic illustration of an aircraft fuselage during installation of the crown module of Fig. 6;
- Fig. 8: a schematic illustration of several steps of a method in accordance with an embodiment of the invention;
- Fig. 9A: an exemplary lavatory module in front view;
- Fig. 9B: the lavatory module of Fig. 9A in a side view C, illustrating a further use of the system coupling devices and arrangement of Figs.1A-C, 2A-C, 3A-C according to a further embodiment;
- Fig. 10: a perspective back view of a galley module illustrating a further use of the system coupling devices and arrangement of Figs. 1A-C, 2A-C, 3A-C according to a still further embodiment;
- Fig. 11: a perspective interior view of a part of an exemplary aircraft cabin including various assemblies;
- Fig. 12: perspective separate views of various assemblies of the exemplary aircraft cabin of Fig. 11, illustrating further uses of the system coupling devices and arrangement of Figs. 1A-C, 2A-C, 3A-C, in accordance with still further embodiments; and
- Fig. 13: an exemplary overhead storage bin as an assembly arranged in an aircraft fuselage, illustrating a further use of the system coupling devices and arrangment of Figs. 1A-C, 2A-C, 3A-C.

The enclosed drawings are intended to illustrate embodiments of the invention so that the invention may be further understood. The drawings, in conjunction with the description, are intended to explain principles and concepts of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitely stated otherwise.

### DETAILED DESCRIPTION OF EMBODIMENTS

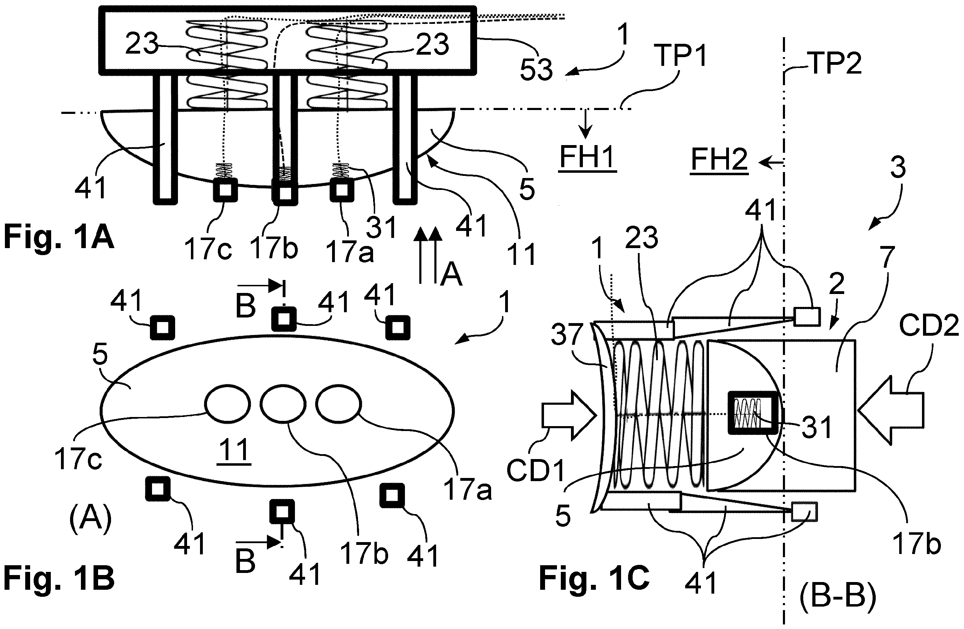

A system coupling arrangement 3 including a first system coupling device 1 and a second system coupling device 2 according to an embodiment is schematically illustrated in Figs. 1A-C, 2A-C, 3A-C.

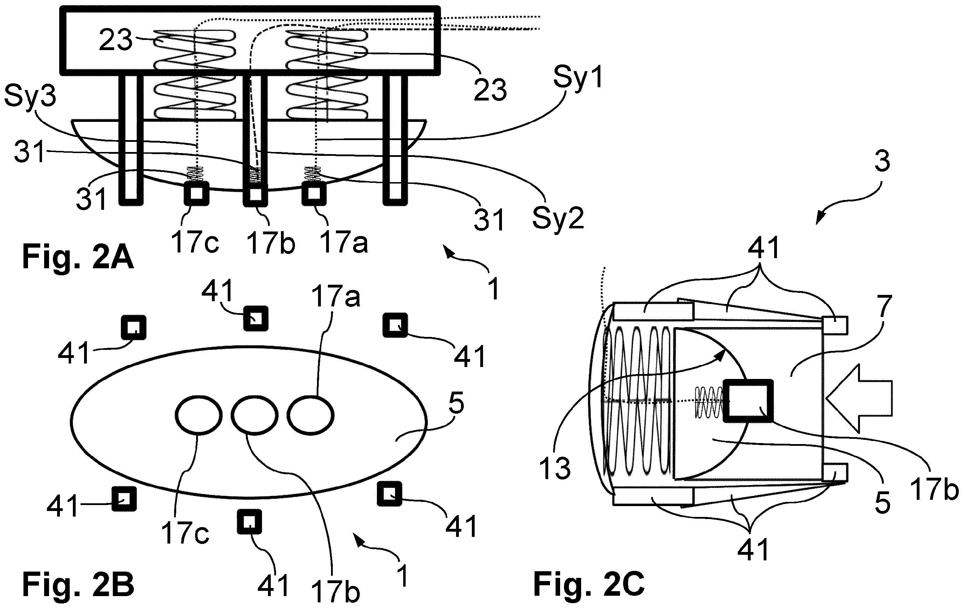

Exemplary systems Sy1, Sy2 and Sy3 to be coupled are schematically indicated in particular in Fig. 2A. The systems Sy1, Sy2, Sy3 each may for example be one of an electrical line or a data line or a pneumatic line or a hydraulic line or a water conduit.

The first system coupling device 1 comprises a convex body 5 having a curved surface portion 11, which is a portion of an ovoid or ellipsoid, preferably of a triaxial ellipsoid. Without external load acting on the body 5, the two largest semi-axes of the ellipsoid are parallel to, and in Fig. 1A-C in particular contained in, a transverse plane TP1 which extends transverse, and preferably substantially perpendicular, to a direction CD1 along which the device 1 may be moved for system coupling. The surface portion 11 faces a forward half-space FH1 relative to the body 5 during joining the device 1 with the further device 2 in order to form the arrangement 3. The device 2 and the joining of devices 1, 2 will be described below in more detail.

The device 1 comprises several, in the embodiment of Figs. 1A-C, 2A-C, 3A-C three, system connector components 17a-17c carried by the body 5. It should, however, be understood that more or less than three system connector components 17a-17c may be provided in other embodiments. The number of system connector components may in particular depend on the number of systems that preferably should be connected in one step using the device 1. Depending for example on the type of systems Sy1, Sy2, Sy3 to be coupled, the system connector components 17a-17c may include system connector components of the same type or of different types.

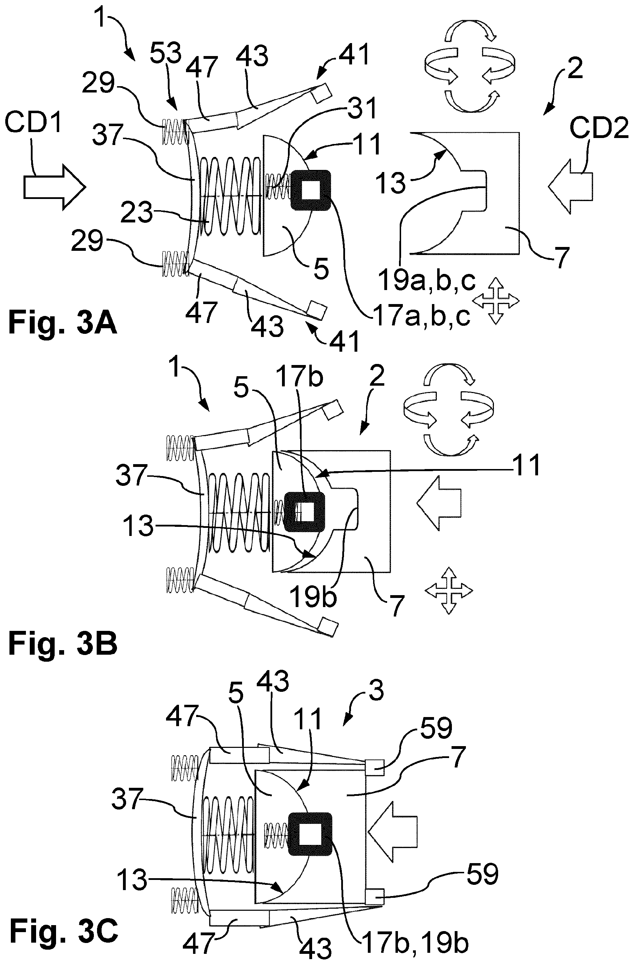

Each of the system connector components 17a-17c or at least a movable part thereof is elastically supported by means of a spring 31 on or relative to the body 5. In particular, the system connector components 17a-17c or the movable parts thereof may be elastically displacable independently from each other along a direction parallel to the coupling direction CD1. In Fig. 2A, 3A, for example, the system connector components 17a-17c or the movable parts thereof protrude from the curved surface portion 11. Also, see Figs. 1B, 2B, the system connector components 17a-17c are arranged within the curved surface portion 11 and are each peripherally completely surrounded by the curved surface portion 11. The body 5 having the convex surface portion 11 and carrying the protruding system connector components 17a-17c forms, in the embodiment, a so-called male system interface.

The first system coupling device 1 is adapted for "click-and-snap" coupling and includes a bistable mechanism 53 configured to be brought into an open configuration and a closed configuration. The open configuration is shown in exemplary manner in Figs. 3A and 3B, while the closed configuration is shown in Figs. 2C and 3C. Fig. 1C also shows the mechanism 53 in an open configuration during the coupling process.

The bistable mechanism 53 comprises a base section 37 which may be formed in the manner of a thin, curved plate, and side sections 41 which in the embodiment are formed in a leg-like manner and are arranged to as to protrude, e.g. from an outer rim of the base section 37, toward and into the forward half-space FH1.

Between the side sections 41, the body 5 is arranged. In the embodiment, the side sections 41 protrude beyond the surface 11 and are arranged along the periphery of the body 5, spaced from each other. The body 5 is elastically supported on the base section 37 by springs 23. Further, the side sections 41 are laterally spaced from the body 5. Thus, the body 5 is elastically movable with respect to its position along and transverse to the coupling direction CD1. Also, the body 5 can be deflected through an angle from the position shown in Fig. 1A, and is hence elastically rotatably movable with respect to the orientation of the curved surface 11, too.

The side sections 41 of the bistable mechanism 53 each comprise a first leg portion 43 and a second leg portion 47, connected to each other. The second leg portion 47 is connected at a proximal end to the base section 37 at the rim thereof. At a distal end of the first leg portion 43, a retaining portion 59 is provided. The retaining portion 59 is formed with an edge protruding toward a space between opposing side sections 41.

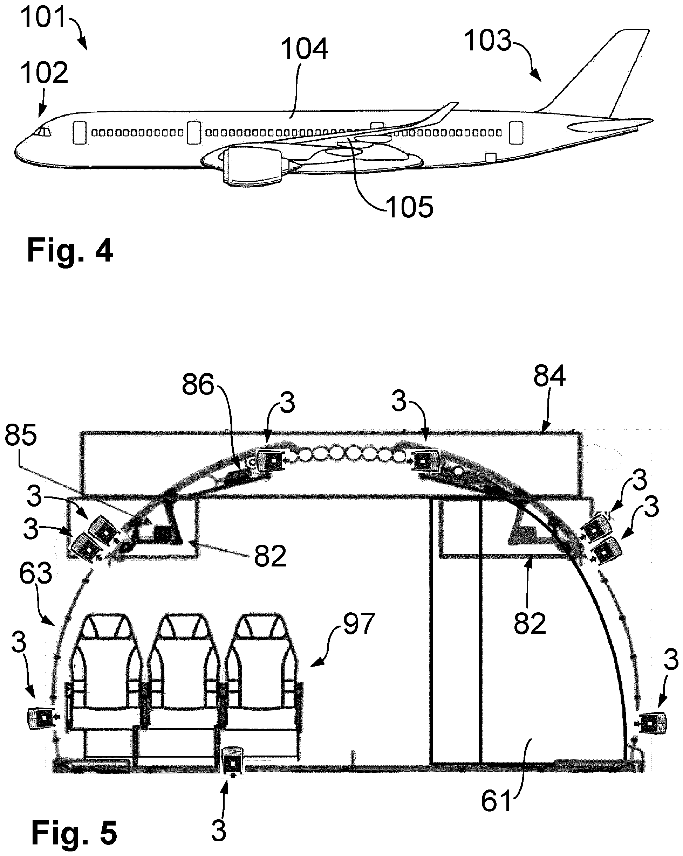

At the rim of the base section 37, the base section 37 is supported generally on a first assembly that, for instance, includes portions of the systems Sy1, Sy2, Sy3 which should be connected to other portions of these systems Sy1, Sy2, Sy3 which may be provided as part of another, second assembly that supports the second system coupling device 2. Such assemblies are not shown in Figs. 1A-1C, 2A-2C, 3A-3C for the sake of clarity, but will be described below with reference to Figs. 4-7, 9A-B, 10-13.

The second system coupling device 2 comprises a body 7 provided with a curved surface portion 13, the body 7 being concave in the region of the surface portion 13. The curved surface portion 13, too, is a portion of an ovoid or ellipsoid, preferably of a triaxial ellipsoid, preferably of the same type, dimension and parameters as the ellipsoid that defines the surface portion 11.

In case of the body 7, the two largest semi-axes of the ellipsoid are parallel to a transverse plane TP2 which extends transverse, and preferably substantially perpendicular, to a forward direction CD2 along which the device 2 may be moved towards device 1 for system coupling. The surface portion 13 faces a forward half-space FH2 relative to the body 7 during joining the second device 2 with the first device 1 in order to form the arrangement 3.

The body 7 of the second device 2 carries a plurality of system connector components 19a-19c, and specifically three system connector components 19a-19c in this embodiment. It should be understood that a greater or smaller number of system connector components 19a-19c can be provided. Preferably, the same number of system connector components 17a-17c and 19a-19c are provided, and corresponding system connector components 17a and 19a, 17b and 19b, 17c and 19c are configured to connect a system Sy1, Sy2 and Sy3, respectively, of the same type and to be capable of interacting for operative connection of the system Sy1, Sy2, Sy3. Thus, the body 7 may carry at least two system connector components 19a-19c of the same type and/or of different type. The system connector components 19a-19c are each formed with a recess extending into the body 7, see Figs. 3A-3B.

The system connector components 19a-19c are arranged in the region of the curved surface portion 13 and are each peripherally entirely surrounded by the concave surface portion 13. The positions of the connector components 19a-19c correspond to those of the connector components 17a-17c within the surface portion 11. The body 7 including the concave surface portion 13 and carrying the system connector components 19a-19c forms a so-called female system interface.

The coupling of the systems Sy1, Sy2, Sy3 by means of the system coupling devices 1 and 2 is accomplished as follows.

The devices 1, 2 are relatively moved towards each other essentially along the opposing directions CD1 and CD2. In various useful implementations, only one of the devices 1, 2 is actually moved, while the other one of the devices 1, 2 is at rest, resulting in relative movement of the devices 1, 2.

The start of this movement is shown in Fig. 3A. The directions CD1, CD2 may be parallel and the devices 1, 2 may be perfectly aligned in a few cases. Generally, in practise, however, the directions CD1, CD2 of relative movement will only be approximately parallel, and some imperfection or tolerance in the relative positioning and orientation of the devices 1, 2 will be present. Fig. 3A also shows that the bistable mechanism 53 has in advance been brought into its open configuration.

As the devices 1, 2 move towards each other, the surface portions 11 and 13 at some instant contact each other at least partially, see Fig. 3B. The surfaces 11, 13 in this configuration can interact with each other in the manner of bearing surfaces of a condyloid joint, similar to the radiocarpal joint of the human wrist. As the body 5 is elastically supported on the base section 37, translational movements in directions transverse to the directions CD1, CD2 and rotational movements of the body 5 are possible against the elastic restoring force of the springs 23. Accordingly, the surfaces 11, 13 are brought in a relative position and orientation in which tolerances are compensated using an "egg-shape coupling effect" of a condyloid-type joint and the surfaces 11, 13 are fittingly arranged, as in Fig. 3C. In this fitting state, the system connector components 17a-17c and 19a-19c interact in pairs with each other and establish a reliable connection of the two system portions of the systems Sy1, Sy2 and Sy3. In this state, the protruding system connector component 17a-17c can move into the corresponding recess of the system connector component 19a-19c. In such a configuration, relative sliding of the surfaces 11 and 13 on each other is inhibited by virtue of the engagement of the connector components 17a-c, 19a-c.

At the same time, the interaction of the surface portions 11 and 13 creates a force in the sense of pressure acting between these surface portions 11, 13. The pressure acting on the surface portion 11 and thereby on the body 5 is transmitted, via the springs 23, onto the base section 37. Once the force acting on the base section 37 is sufficient, the thin base section 37 deflects, and the bistable mechanism 53 is brought, or snaps, into its closed configuration, shown in Fig. 3C. In this closed configuration, the side sections 41 rather closely follow the sides of the bodies 5, 7 in their engaged configuration, and the retaining portions 59 engage rear edges of the body 7, whereby the bodies 5 and 7 are retained in their relative positions, in which they abut against each other along the surface portions 11 and 13. Instead of the rear edges of the body 7, the retaining portions 59 could be engaged with engagement features of other type provided on the body 7, such as protrusions, grooves, or similar.

The devices 1, 2 which cooperate to form the arrangement 3 thus form an automated, self-closing and self-aligning, click-and-snap coupling for systems Sy1, Sy2, Sy3 with a tolerance compensation functionality for rotational and translational tolerances. In Fig. 3C, the coupling arrangement 3 is closed, locked and centered, and the systems Sy1, Sy2, Sy3 are correctly coupled.

Fig. 4 shows an exemplary aircraft 101 in which the arrangement 3 described above with reference to Figs. 1A-C, 2A-C, 3A-C may be used in advantageous manner. The aircraft 101, in Fig. 4 a passenger aeroplane, comprises a nose 102, an empennage 103, a fuselage 104 and wings 105.

More specifically, the aircraft 101 comprises a structure which may be made with metal materials such as aluminum alloys and/or with fibre-reinforced composite materials. Further, in addition to the aircraft structure, the aircraft 101 is equipped with various devices, modules, monuments and assemblies mounted to the structure and fulfilling various functions e.g. during operation of the aircraft 101. Such devices, modules, monuments and assemblies will in the following be referred to as assemblies for simplification of the presentation.

In order to ensure their operation, many of these assemblies are connected, during the installation process, to systems such as an electrical line, a data line, a pneumatic line, a hydraulic line, a water conduit, and so on. In other words, a portion of such a system is within the assembly to be connected, while another portion runs, for example, along the fuselage structure. A fuselage structure equipped with such system portions may be considered a fuselage assembly.

The arrangement 3 considerably facilitates the connection of such system portions during installation of assemblies such as those mentioned above.

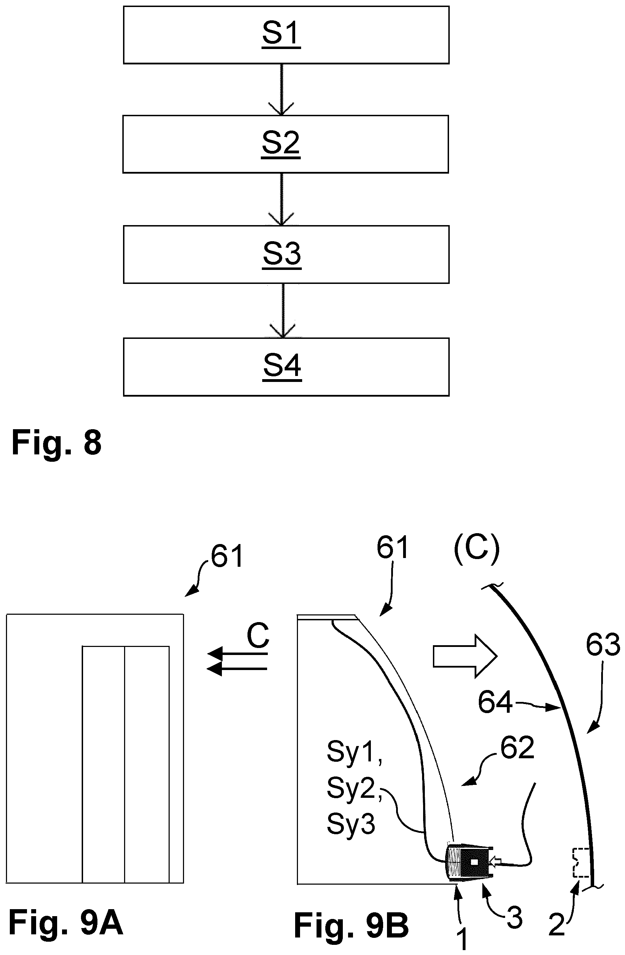

In exemplary manner, Figs. 9A-9B schematically show a module formed as a lavatory assembly 61. Fig. 9B also shows part of a fuselage structure equipped with portions of systems such as systems Sy1, Sy2 and/or Sy3 and with a second system coupling device 2, which is referred to below as a fuselage assembly 63.

A first system coupling device 1 is mounted on a rear side 62 of the lavatory assembly 61, facing an inner side 64 of the fuselage assembly 63, at a position nominally corresponding to the position of the associated second device 2 if the lavatory assembly 61 is placed in its target position within the aircraft 101 without imprecision or tolerances. The devices 1, 2 are configured as discussed above with reference to Figs. 1A-C, 2A-C, 3A-C.

In Fig. 9B, and also in Figs. 5, 6, 10, 12 and 13, the devices 1 and 2 are schematically in the form of a closed and centered arrangement 3 at each of a plurality of coupling locations. It should, however, be understood that in an uninstalled state of an assembly discussed in each of these figures, one of the devices 1 or 2 is mounted on the assembly, while the other one of the devices 1 or 2 is mounted on the associated further assembly or structure. The arrangement 3 is formed once the installation is complete and the click-and-snap action has taken place.

If, for installation, the lavatory assembly 61 is moved towards the inner side 64 of the fuselage assembly 63, the coupling of several systems Sy1, Sy2, Sy3 is accomplished automatically. As described above, the surface portions 11, 13 partially contact each other, the elastically movable body 5 adapts regarding its position and/or orientation to the body 7 which may be fixedly attached to the fuselage structure as part of the assembly 63, the system connector components 17a-c, 19a-c establish the connection of the system portions, and the bistable mechanism 53 snaps into its closed configuration, whereby the bodies 5, 7 are durably retained against each other in the connected configuration.

The devices 1, 2 which cooperate to form the system coupling arrangement 3 hence enable the coupling of the systems Sy1, Sy2, Sy3 in a "blind" manner, i.e. in locations difficult to observe and to access, such as at the rear side 62 of the lavatory assembly 61. When the exemplary assembly 61, which is rather large and heavy, is shifted into its installation position, the system coupling arrangement 3 will not be damaged or destroyed in case there is an imprecision in the positioning and orientation of the assembly 61 when moving it into position. Forces acting on the bodies 5, 7 are distributed across the comparatively large area of the surface portions 11 and 13, and the bodies 5, 7 can adjust in the manner of a condyloid joint until the system connector components 17a-c can properly engage with their counterparts 19a-c.

Fig. 8 schematically illustrates a method of coupling two system portions of each of the systems Sy1, Sy2, Sy3. The method comprises the steps S1, S2, S3, S4 and will be discussed with reference to the assembly 61 of Fig. 9A-B, but can be applied in analogous manner to the further exemplary assemblies to be described further below.

In step S1, the first assembly 61 which comprises the first system coupling device 1 arranged on a first, rear side 62 of the first assembly 61, and the second assembly 63 which comprises the second system coupling device 2 arranged on the second, inner side 64 of the second assembly 63 are provided.

In step S2, the first and second assemblies 61, 63 are arranged relative to each other with a distance therebetween, e.g. as in Fig. 9B. In this state, the first and second sides 62, 64 are oriented towards each other, the curved surface portion 11 faces the forward half-space FH1 relative to the body 5, and the curved surface portion 13 faces the forward half-space FH2 relative to the body 7.

In step S3, the first and second assemblies 61, 63 are moved relative to each other so as to bring the curved surface portions 11 and 13 into at least partial contact with each other. As an example, in Fig. 9A-B, the lavatory assembly 61 is moved while the fuselage assembly 63 is at rest.

In step S4, one or both of the first and second assemblies 61, 63, in the example of Fig. 9A-B the assembly 61, is or are moved further so that the curved surface portion 11 adjusts in position and/or orientation to the surface portion 13 in such a way that the curved surface portions 11, 13 assume a configuration of interacting bearing surfaces of a condyloid joint and become fittingly arranged relative to each other. In the fitting arrangement of the curved surface portions 11 and 13, the connection of the two system portions is established via the system connector components 17a-17c, 19a-19c. Also, when the pressure on the base section 37 is sufficiently high, the bistable mechanism 53 snaps into its closed configuration and locks and centers the bodies 5, 7, and hence the system connector components 17a-c, 19a-c, to each other. In the example of Fig. 9A-B, it is the body 5, mounted via the springs 23, base section 37 and springs 29 on the assembly 61, which adjusts translationally and rotationally, while the body 7 is fixedly attached to the fuselage structure. Yet, see Fig. 5, the arrangement 3 may be provided in reverse orientation, i.e. the base section 37 may be mounted via the springs 29 on the fuselage structure as part of the fuselage assembly 63, and the body 7 may be fixedly connected to the lavatory assembly 61.

Figs. 5-7 and 10-13 illustrated further assemblies, the installation of which may be considerably facilitated using the system coupling arrangement 3 of Figs. 1A-1C, 2A-2C, 3A-3C.

Fig. 5 schematically shows an upper part of an aircraft fuselage.

In an embodiment, the arrangement 3 may be used in connection with the installation of a seat module assembly 97. The seat module assembly 97 may comprise one or more seats. The assembly 97 can be provided for example with the first system coupling device 1, and an associated second system coupling device 2 can be mounted on the fuselage assembly 63, e.g. in the region of the passenger floor. In a variant, the assembly 97 can be provided with the second system coupling device 2, and the first system coupling device 1 may be mounted on the fuselage structure as part of the fuselage assembly 63, e.g. laterally in the region of a fuselage sidewall.

Arrangements 3 may be used, in further embodiments, to facilitate the installation in the region of the top crown 84 and the crown triangle assembly 82.

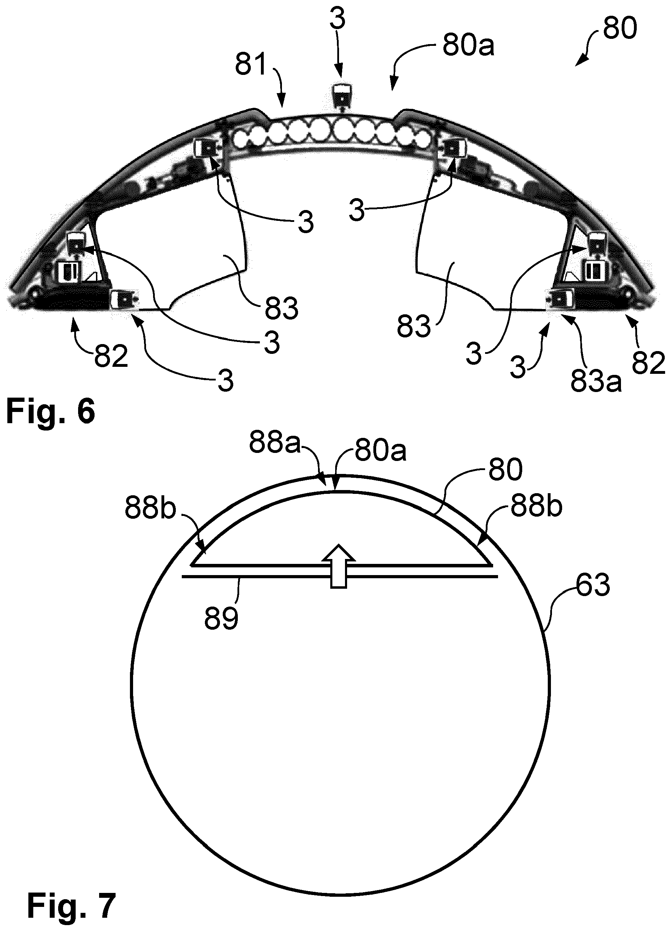

In an embodiment, see Figs. 6 and 7, a crown module assembly 80 may for instance be provided. The crown module assembly 80 is conceived to be mounted as a whole inside the fuselage 104, using a mounting platform 89. System portions of systems, e.g. Sy1, Sy2, Sy3, which form part of the crown module assembly 80 and of the fuselage assembly 63, respectively, may be coupled in the top crown region using an arrangement 3. For example, a second system coupling device 2 as described above with reference to Figs. 1A-C, 2A-C, 3A-C can be mounted on the crown module assembly 80 at an upper side 80a of the assembly 80, and an associated first system coupling device 1 can be mounted on an upper inner side of the fuselage assembly 63. Thus, this system connection may be accomplished in a "blind" manner, as the connection location will be comparatively difficult to access and observe. Accordingly, in such embodiments, the arrangement(s) 3 enable(s) in advantageous manner a simple and quick coupling of systems as required. Arrangements 3 may be provided in upper locations 88a and/or lateral locations 88b of the assembly 80.

In further embodiments, the crown module assembly 80 may comprise submodules which can be connected to each other. In this case, system connections at interfaces between the submodules may be implemented using the system coupling arrangement 3 of Figs. 1A-C, 2A-C, 3A-C. In particular, the arrangement 3 may in various embodiments be useful for coupling systems across an interface between an upper submodule assembly 81 and lateral submodule assemblies of the crown module 80, or for coupling systems across an interface between a crown triangle assembly 82 and the fuselage assembly 63, or for coupling systems across an interface between a universal cabin interface 85 or an electrical distribution box 86 and further components of the crown module assembly 80.

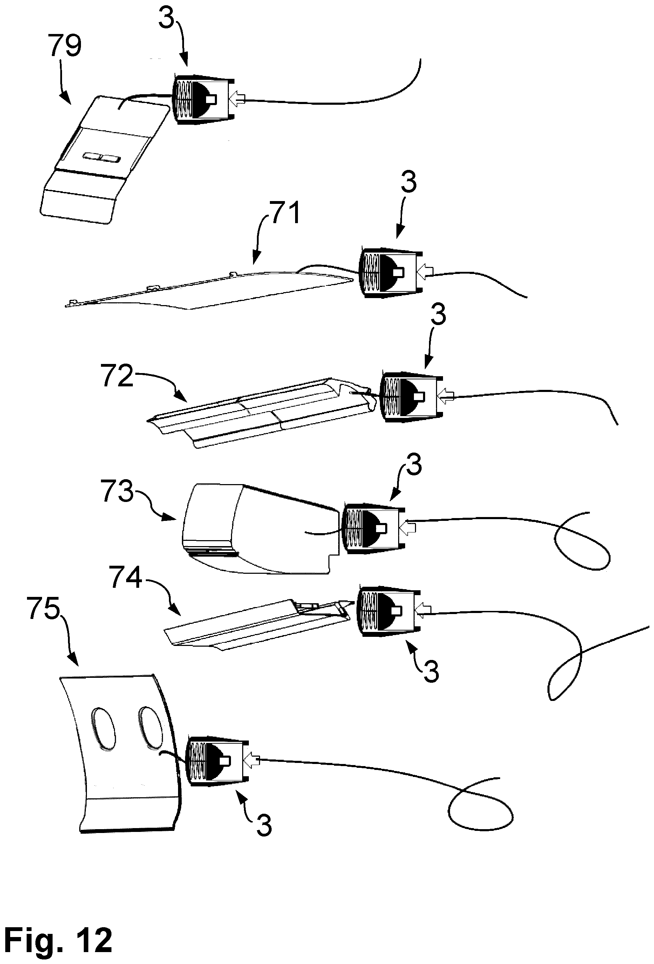

Moreover, the arrangement 3 may be used in a further embodiment to couple systems across an interface between an overhead storage compartment assembly 83 and part of the crown module assembly 80 or between the overhead storage compartment assembly 83 and the fuselage assembly 63. For this purpose, the second system coupling device 2 may be mounted on a rear side 83a of the overhead storage compartment assembly 83 and the first system coupling device 1 may be mounted e.g. on a part of the crown triangle assembly 82 as in Fig. 6. Alternatively, the first system coupling device 1 can be mounted on an overhead storage compartment assembly 73, see Fig. 12.

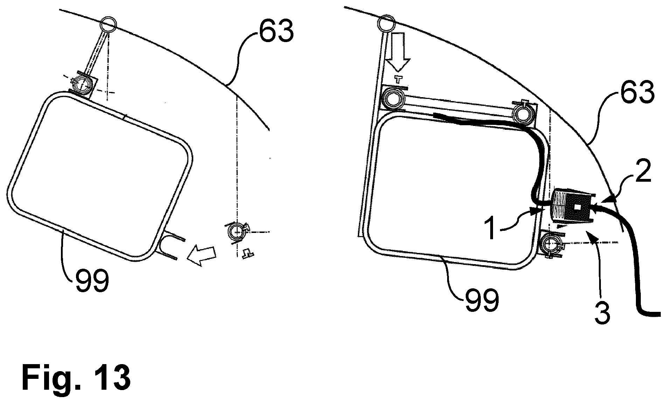

Fig. 13 shows two different arrangements of a storage bin 99 in relation to a fuselage assembly 63. The bin 99 is a further exemplary assembly in connection with which the system coupling arrangement 3 may be used. In the example of Fig. 13, the bin 99 is of the type described in DE 10 2020 108 392 A1. Of course, use of the arrangement 3 in accordance with the embodiment of Figs. 1A-C, 2A-C, 3A-C with many other types of storage or baggage bin in aircraft is conceivable. Fig. 13 shows in exemplary manner the first system coupling device 1 mounted on a rear side of the bin 99, while the second system coupling device 2 is mounted on the fuselage assembly 63.

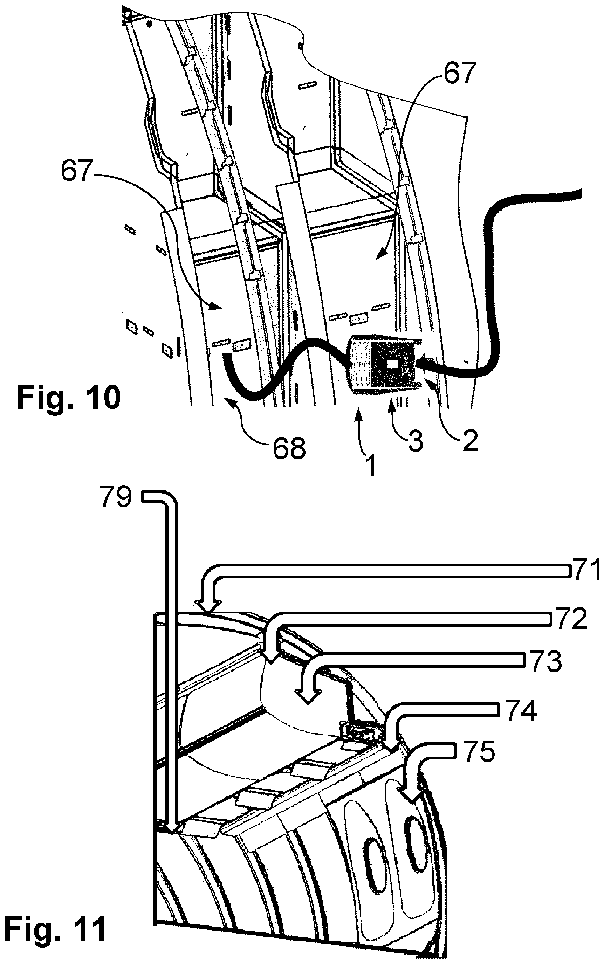

Fig. 10 shows a galley module assembly 67. On a rear side 68 of the assembly 67, oriented towards the inner side 64 of the fuselage assembly 63, system portions in the assembly 67 are coupled to system portions which are part of the fuselage assembly 63, using the arrangement 3. For instance, the first system coupling device 1 can be attached to the rear side 68 of the galley module assembly 67.

Further cabin components 71-75, 79 are shown in Fig. 11. Besides the overhead storage compartment assembly 73, the system coupling devices and arrangement 1, 2, 3 of Figs. 1A-C, 2A-C, 3A-C may be useful for coupling systems when installing a ceiling assembly 71, a lateral ceiling assembly 72, a light cover assembly 74, a sidewall assembly 75 and/or a power supply assembly 79. Exemplary configurations are schematically shown in Fig. 12.

The system coupling devices 1, 2 and the system coupling arrangement 3, including surfaces 11, 13 that are adapted to act as bearing surfaces of a condyloid-type joint in a biomimetic manner, may be useful in particular during the production of modular aircraft, for installation of system modules and cabin modules, and can help to improve and facilitate the structure-systems-cabin installation. The system coupling using the arrangement 3 is robust and is capable of handling tolerances during the coupling process without being damaged.

Although the invention has been completely described above with reference to preferred embodiments, the invention is not limited to these embodiments but may be modified in many ways.

### List of reference signs

- 1: first system coupling device
- 2: second system coupling device
- 3: system coupling arrangement
- 5: first body (first system coupling device)
- 7: second body (second system coupling device)
- 11: first curved surface portion (first body)
- 13: second curved surface portion (second body)
- 17a-c: system connector component (first system coupling device)
- 19a-c: system connector component (second system coupling device)
- 23: resilient member
- 29: resilient member
- 31: resilient member
- 37: base section
- 41: side section
- 43: first leg portion
- 47: second leg portion
- 53: bistable mechanism
- 59: retaining portion
- 61: lavatory assembly
- 62: rear side (lavatory assembly)
- 63: fuselage assembly
- 64: inner side (fuselage assembly)
- 67: galley module assembly
- 68: rear side (galley module assembly)
- 71: ceiling assembly
- 72: lateral ceiling assembly
- 73: overhead storage compartment assembly
- 74: light cover assembly
- 75: sidewall assembly
- 79: power supply assembly
- 80: crown module assembly
- 80a: upper side (crown module assembly)
- 81: upper submodule assembly
- 82: crown triangle assembly
- 83: overhead storage compartment assembly
- 83a: rear side (overhead storage compartment assembly)
- 84: top crown
- 85: universal cabin interface
- 86: electrical distribution box
- 88a: upper location
- 88b: lateral location
- 89: mounting platform
- 97: seat module assembly
- 99: storage bin
- 101: aircraft
- 102: nose
- 103: empennage
- 104: fuselage
- 105: wing
- CD1: coupling direction (first system coupling device)
- CD2: coupling direction (second system coupling device)
- FH1: forward half-space relative to first system coupling device
- FH2: forward half-space relative to second system coupling device
- Sy1: system
- Sy2: system
- Sy3: system
- S1: method step
- S2: method step
- S3: method step
- S4: method step
- TP1: transverse plane
- TP2: transverse plane

## Claims

1. System coupling device (1, 2),
comprising a body (5, 7) which has a curved surface portion (11, 13) and carries at least one first system connector component (17a-17c, 19a-19c); wherein the first system connector component (17a-17c, 19a-19c) is configured to be capable of interacting with an associated second system connector component (19a-19c, 17a-17c) in order to connect two system portions of at least one system (Sy1, Sy2, Sy3); and
wherein the curved surface portion (11, 13) is configured as a bearing surface of a condyloid joint and is arranged in such a manner as to face a forward half-space (FH1, FH2) during system coupling using the device (1, 2).

2. System coupling device according to claim 1,
**characterized in that** the first system connector component (17a-17c, 19a-19c) is arranged in the region of the curved surface portion (11, 13), and preferably is peripherally surrounded at least in part by the curved surface portion (11, 13).

3. System coupling device according to claim 1 or 2,
**characterized in that** the first system connector component (17a-17c) is configured to protrude at least partially from the curved surface portion (11) at least in a protruding state of the first system connector component (17a-17c) or **in that** the first system connector component (19a-19c) is formed with a recess extending into the body (7) and/or is configured to form such a recess in an inwardly-moved state of the first system connector component (19a-19c).

4. System coupling device according to at least one of the preceding claims, **characterized in that** the body (5, 7) carries two or more first system connector components (17a-17c, 19a-19c).

5. System coupling device according to claim 4, **characterized in that** the first system connector components (17a-17c, 19a-19c) include at least two system connector components of the same type and/or at least two system connector components of different type.

6. System coupling device according to at least one of the preceding claims, **characterized in that** the curved surface portion (11, 13) is formed as a portion of an ovoid or an ellipsoid, preferably of a triaxial ellipsoid, and in particular **in that** the curved surface portion (11, 13) is configured such that the two largest semi-axes of the ellipsoid are oriented transverse, preferably substantially perpendicular, to a direction (CD1, CD2) along which the first and second system connector components (17a-17c, 19a-19c) can be operatively connected by moving the first and second system connector components (17a-17c, 19a-19c) towards each other.

7. System coupling device according to at least one of the preceding claims, **characterized in that** the body (5, 7) is convex or concave in the region of the curved surface portion (11, 13).

8. System coupling device according to at least one of the preceding claims, **characterized in that** the system coupling device (1) further comprises a bistable mechanism (53) configured to assume an open configuration and a closed configuration, wherein the bistable mechanism (53) comprises a base section (37) and side sections (41), wherein the body (5) is supported on the base section (37) and arranged between at least two of the side sections (41).

9. System coupling device according to claim 8,
**characterized in that** the body (5) is elastically supported on the base section (37) and in particular **in that** the body (5) is connected to the base section (37) by at least one resilient member (23), in particular at least one spring.

10. System coupling device according to at least one of the preceding claims, **characterized in that** the first system connector component (17a-17c) is elastically connected to the body (5) or comprises at least one system connector component part elastically connected to the body (5).

11. System coupling arrangement (3), comprising a first system coupling device (1) and a second system coupling device (2), wherein each of the first and second system coupling devices (1, 2) comprises a body (5, 7) having a curved surface portion (11, 13) and wherein each of the bodies (5, 7) carries at least one system connector component (17a-17c, 19a-19c);
wherein the system connector components (17a-17c, 19a-19c) are configured to interact with each other so as to connect two system portions of at least one system (Sy1, Sy2, Sy3) in a configuration in which the curved surface portions (11, 13) are fittingly arranged relative to each other;
wherein the curved surface portions (11, 13) are configured to be capable of interacting with each other in the manner of bearing surfaces of a condyloid joint before the two system portions are connected by the interacting system connector components (17a-17c, 19a-19c); and
wherein the curved surface portion (11, 13) of each body (5, 7) is arranged in such a manner as to face a forward half-space (FH1, FH2) relative to the body (5, 7) during joining the devices (1, 2) in order to form the system coupling arrangement (3).

12. System coupling arrangement according to claim 11,
**characterized in that** the system (Sy1, Sy2, Sy3) is an electrical line or a data line or a pneumatic line or a hydraulic line or a water conduit.

13. Assembly (61, 63, 67, 71-75, 79-83, 85, 86, 97, 99) configured for being installed in or forming part of an aircraft or spacecraft (101), in particular an aeroplane, comprising a system coupling device (1, 2) according to at least one of claims 1 to 10.

14. Aircraft or spacecraft (101), in particular aeroplane, comprising a system coupling arrangement (3) according to claim 11 or 12 and/or an assembly (61, 63, 67, 71, 72-75, 79-83, 97) according to claim 13.

15. Method of coupling two system portions of at least one system (Sy1, Sy2, Sy3), comprising:
providing (S1) a first assembly (61, 63, 67, 71-75, 79-83, 85, 86, 97, 99) which comprises a first system coupling device (1) arranged on a first side (62, 64, 68, 80a, 83a) of the first assembly (61, 63, 67, 71-75, 79-83, 85, 86, 97, 99), and
providing (S1) a second assembly (61, 63, 67, 71-75, 79-83, 85, 86, 97, 99) which comprises a second system coupling device (2) arranged on a second side (62, 64, 68, 80a, 83a) of the second assembly (61, 63, 67, 71-75, 79-83, 85, 86, 97, 99),
wherein each of the first and second system coupling devices (1, 2) comprises a body (5, 7) having a curved surface portion (11, 13), each of the bodies (5, 7) carrying at least one system connector component (17a-17c, 19a-19c);
arranging (S2) the first assembly (61, 63, 67, 71-75, 79-83, 85, 86, 97, 99) and the second assembly (61, 63, 67, 71-75, 79-83, 85, 86, 97, 99) relative to each other with a distance therebetween, the first and second sides (62, 64, 68, 80a, 83a) oriented towards each other and the curved surface portion (11, 13) of each body (5, 7) facing a forward half-space (FH1, FH2) relative to the body (5, 7);
moving (S3) one or both of the first and second assemblies (61, 63, 67, 71-75, 79-83, 85, 86, 97, 99) so as to bring the curved surface portions (11, 13) into at least partial contact with each other, and further moving (S4) one or both of the first and second assemblies (61, 63, 67, 71-75, 79-83, 85, 86, 97, 99) so that one or both of the curved surface portions (11, 13) adjusts or adjust in position and/or orientation in such a way that the curved surface portions (11, 13) assume a configuration of interacting bearing surfaces of a condyloid joint and become fittingly arranged relative to each other, wherein in a fitting arrangement of the curved surface portions (11, 13) the connection of the two system portions is established via the system connector components (17a-17c, 19a-19c).
